# EUROPEAN PATENT SPECIFICATION

(11) **EP 4 645 891 B1**
(45) Date of publication and mention of the grant of the patent: **02.09.2026**
(21) Application number: 24723691.2
(22) Date of filing: 06.03.2024
(51) Int. Cl.: H04N 23/81, G06T 5/70

(54) **COLOR NOISE REDUCTION METHOD AND APPARATUS, AND ELECTRONIC DEVICE AND COMPUTER-READABLE STORAGE MEDIUM**
VERFAHREN ZUR REDUZIERUNG VON FARBRAUSCHEN, VORRICHTUNG, ELEKTRONISCHE VORRICHTUNG UND COMPUTERLESBARES SPEICHERMEDIUM
PROCÉDÉ ET APPAREIL DE RÉDUCTION DE BRUIT DE COULEUR, ET DISPOSITIF ÉLECTRONIQUE ET SUPPORT DE STOCKAGE LISIBLE PAR ORDINATEUR

(43) Date of publication of application: 05.11.2025
(73) Proprietor: VeriSilicon Microelectronics (Chengdu) Co., Ltd., Chengdu, Sichuan 610041 (CN); VeriSilicon Microelectronics (Shanghai) Co., Ltd., Shanghai 201203 (CN); VeriSilicon Microelectronics (Nanjing) Co., Ltd., Nanjing, Jiangsu 211500 (CN); VeriSilicon Technology (Shanghai) Co., Ltd., Shanghai 201306 (CN); Verisilicon Microelectronics (Hainan) Co., Ltd., Haikou, Hainan 570208 (CN)
(72) Inventor: HUANG, Fang, Chengdu, Sichuan 610041 (CN); HE, Huali, Chengdu, Sichuan 610041 (CN); KONG, Xiaodong, Shanghai 201203 (CN); ZHOU, Lei, Shanghai 201203 (CN); YANG, Pingzhong, Shanghai 201203 (CN)
(74) Representative: Von Rohr Patentanwälte Partnerschaft mbB
(86) International application number: PCT/CN2024/080400
(87) International publication number: WO 2025/184843

(56) References cited:
- CN-A- 1 855 995
- CN-A- 1 855 995
- CN-A- 111 882 504
- CN-A- 112 819 721
- CN-A- 116 977 209
- US-A1- 2006 092 174
- US-A1- 2006 092 174
- SMOLKA BOGDAN ET AL: "On the reduction of mixed Gaussian and impulsive noise in heavily corrupted color images", vol. 13, no. 1, 29 November 2023 (2023-11-29), US, XP093262973, ISSN: 2045-2322, Retrieved from the Internet <URL:https://www.nature.com/articles/s41598-023-48036-1> DOI: 10.1038/s41598-023-48036-1

## Description

### Technical Field

The present disclosure relates to the field of image processing technology, in particular to a method for reducing color noise, an apparatus, an electronic device, and a computer-readable storage medium.

### Background Art

In application scenarios such as mobile phones, video surveillance, and other image sensors like CMOS sensor (complementary metal-oxide-semiconductor sensor) and CCD sensor (charge coupled device sensor), images often contain some low-frequency noise, which manifests as low-frequency, brightly colored patches in RGB images. In the YUV domain, these low-frequency noises are more prominent in the UV channel. Therefore, it is common to use denoising methods on the UV channel to remove low-frequency color noise from the image.

However, in the prior art, methods for noise reduction make it difficult to balance the color noise and color overflow issues at the edges of the image, thus resulting in poor performance. US 2006/092174 A1 relates to a colour noise suppressing system, which has a converter, a saturation compute device, a maximum compute device, and a chroma suppressor. The converter converts a YUV image signal into an RGB image signal. The saturation compute device is connected to the converter for computing a saturation from the RGB image signal and converting the saturation into a first gain. The maximum compute device is connected to the converter for computing a maximum from the RGB image signal and converting the maximum into a second gain. The chroma suppressor is connected to the saturation compute device and the maximum compute device for performing chroma suppression on the YUV image signal according to the first and second gains.

### Summary

In view of this, the objective of the present disclosure is to provide a method for reducing color noise, an apparatus, an electronic device, and a computer-readable storage medium to address the problem of existing noise reduction methods being difficult to balance color noise at the edges of the image.

In the first aspect, the present disclosure provides a method for reducing color noise, wherein the method comprises converting a source image in YUV format to a target image in a target format, wherein the target format is a color coding format that does not use luma for coding; calculating a pixel difference between neighboring pixel points in the target image to obtain a difference distribution; and performing noise reduction on the source image based on the difference distribution.

In the above embodiment, using the image in the target format indirectly introduces information from the Y channel of the source image. This effectively distinguishes the similarity between neighboring pixels and maximizes the reduction of color noise in the edge region. At the same time, it addresses color overflow and residual edge noise in the color noise reduction process.

In one optional embodiment of the present disclosure, the step of performing noise reduction on the source image based on the difference distribution comprises calculating a weight parameter of each pixel point based on the pixel difference corresponding to each pixel point of the source image in the difference distribution; and weighting the neighboring pixels corresponding to each pixel point in the source image based on the weight parameter of each pixel point to achieve noise reduction.

In the above embodiment, the target image is weighted as a guide image of the source image, and the target image indirectly introduces information from the Y channel of the source image. This effectively distinguishes the similarity between neighboring pixels and maximizes the reduction of color noise in the edge region. At the same time, there will be no color overflow and residual edge noise in the color noise reduction process.

In one optional embodiment of the present disclosure, the step of calculating a pixel difference between neighboring pixel points in the target image to obtain a difference distribution comprises calculating the pixel differences between a pixel point in the target image and all the pixel points in a neighboring region of the pixel point to obtain a difference matrix; and obtaining the difference matrices of all the pixel points in the target image to obtain the difference distribution.

In the above embodiment, obtaining the difference values between a pixel point and all the pixel points in its neighboring region enables the recognition of the variations of the pixel point in all directions, thereby obtaining more information about the pixel point.

In one optional embodiment of the present disclosure, the neighboring region is the region within a preset radius around the pixel point in the target image, with the pixel point as the center.

In one optional embodiment of the present disclosure, the step of performing noise reduction on the source image based on the difference distribution comprises obtaining a weight matrix of each pixel point in the source image, wherein the weight matrix is calculated from the difference matrix of the corresponding pixel point in the target image; and weighting all the pixel points within the neighboring region corresponding to each pixel point in the source image based on the weight matrix of each pixel point to achieve noise reduction.

In the above embodiment, using the difference distribution to build the weight matrix enables the full utilization of the surrounding region of the pixel point so as to denoise the pixel points, thereby enhancing the effectiveness of noise reduction.

In one optional embodiment of the present disclosure, the target format includes RGB format.

In one optional embodiment of the present disclosure, the step of performing noise reduction on the source image based on the difference distribution comprises denoising, separately, a U channel and a V channel, based on the difference distribution.

In the second aspect, the embodiments of the present disclosure provide a color noise reduction apparatus, wherein the apparatus comprises a conversion module, configured for converting a source image in YUV format to a target image in a target format, wherein the target format is a color coding format that does not use luma for coding; a computing module, configured for calculating a pixel difference between neighboring pixel points in the target image to obtain a difference distribution; and a noise reduction module, configured for performing noise reduction on the source image based on the difference distribution.

In the third aspect, the embodiments of the present disclosure provide an electronic device, comprising a memory and a processor, wherein the processor is connected to the memory; the memory is configured for storing programs, and the processor is configured for invoking the programs stored in the memory to execute any of the methods described in the first aspect.

In the fourth aspect, the embodiments of the present disclosure provide a computer-readable storage medium, wherein a computer program is stored therein. When the computer program is executed by a processor, it executes any of the methods described in the first aspect.

Other features and advantages of the present disclosure will be elucidated in the subsequent summary. The objectives and other advantages of the present disclosure can be achieved and obtained through the structures particularly pointed out in the summary and the drawings.

### Brief Description of Drawings

FIG. 1 is a flowchart of a method for reducing color noise provided by the embodiment of the present disclosure;
FIG. 2 is a schematic block diagram of the structure of a color noise reduction apparatus provided by the embodiments of the present disclosure; and
FIG. 3 is a schematic block diagram of the structure of an electronic device provided by the embodiments of the present disclosure.

### Detailed Description of Embodiments

In the following, the embodiments of the present disclosure are described in detail with reference to the drawings. It should be noted that although the same elements are shown in different drawings, they will be indicated by the same reference marks. In the following description, specific details such as detailed configurations and components are provided to aid only in a full understanding of the embodiments of the present disclosure. Thus, it should be clear to those skilled in the art that various changes and modifications to the embodiments described herein may be made without departing from the scope of the present disclosure. In addition, descriptions of well-known functions and constructions are omitted for the sake of clarity and brevity. The terms described below are defined terms in view of the functions in the present disclosure and may vary according to the user, the intent, or the custom of the user. Accordingly, the definitions of terms should be determined based on the content throughout the description.

The present disclosure may have various modifications and various embodiments. In the present disclosure, embodiments are described in detail below with reference to the drawings. It should be understood, however, that the present disclosure is not limited to embodiments, but includes all modifications, equivalents, and alternatives within the scope of the present disclosure.

The terms used herein are used only to describe various embodiments of the present disclosure and are not intended to limit the present disclosure. The singular form is intended to include the plural form unless the context clearly indicates otherwise. In the present disclosure, it should be understood that the terms "comprise" or "include" indicate the presence of features, quantities, steps, operations, structural components, parts, or their combinations, and do not exclude the presence of one or more other features, quantities, steps, operations, structural components, parts, or their combinations; or the possibility of adding one or more other features, quantities, steps, operations, structural components, parts, or their combinations.

All terms used herein have the same meaning as understood by those skilled in the art to which the present disclosure belongs unless defined differently. Unless explicitly defined in the present disclosure, terms (such as those defined in a general dictionary) should be interpreted with the same meaning as they have in the relevant field of context, and should not be interpreted with an idealized or overly formalized meaning.

An electronic device according to one embodiment can be one type of electronic device among various types. Electronic devices may include, for example, portable communication devices (such as smartphones), computers, portable multimedia devices, portable medical devices, cameras, wearable devices, or household appliances. According to one disclosed embodiment, the electronic devices are not limited to the examples mentioned above.

The terms used in the present disclosure are not intended to limit the present disclosure but to encompass various changes, equivalents, or substitutions of corresponding embodiments. Regarding the description of the drawings, similar reference numerals may be used to indicate similar or related elements. Unless otherwise indicated in the relevant context, the singular form of nouns corresponding to items may include one or more of the items. As used herein, phrases such as "A or B", "at least one of A and B", "at least one of A or B", "A, B, or C", "at least one of A, B, and C", and "at least one of A, B, or C" each may include any possible combination of the respective items listed together in the phrase. Terms such as "1st", "2nd", "first", and "second" used herein are used to distinguish one component from another and are not intended to limit the components in other respects (e.g., in terms of importance or sequence). It is intended that if a component (e.g., the first component) is referred to as being "coupled to", "combined with", "connected with" or "connected to" another component (e.g., the second component), with or without the terms "operatively" or "communicatively", the component can be directly (e.g., wired), wirelessly, or via a third component, combined with the other component.

As used herein, the term "module" may include units implemented in hardware, software, or firmware, and may be used interchangeably with other terms such as "logic", "logic block", "component", and "circuit". Modules can be single integrated components or their smallest units or parts suitable for performing one or more functions. For example, according to one embodiment, modules can be implemented in the form of application-specific integrated circuits (ASICs).

For ease of understanding, relevant terms and concepts related to the embodiments of the present disclosure will first be introduced.

The term YUV refers to a color encoding method commonly used in various image processing components. When encoding photos or videos by YUV, taking into account human perceptual capabilities, the chrominance bandwidth is allowed to be reduced. YUV refers to a series of color spaces, including Y'UV, YUV, Y'CbCr, YPbPr, etc. All these color spaces separate luma information from coloring information for encoding. YUV uses three values to represent any color, these values are called Y, U, and V. Y represents luminance or luma, U represents chrominance, and V represents chroma.

For example, in a broader sense, the term YUV can also include the specific color space Y'CbCr used in computer video. The Y' component, also known as luma, represents the luma value of the color. The prime symbol (') is used to distinguish luma from lightness. Lightness is the luma of a value that is closely related to luma, which is typically denoted as Y. Lightness is derived from linear RGB values. However, luma is derived from nonlinear (gamma-corrected) RGB values. Lightness is a measurement closer to true brightness, but for technical reasons, luma is more practical. The prime symbol is often omitted, but the YUV color space consistently uses luma instead of lightness. Cb and Cr represent the chroma offsets for blue and red, respectively.

In the prior art, there are mainly two approaches to removing color noise from YUV images as follows.
1. The UV channel calculates corresponding weighted weights based on the similarity between the current pixel point and the neighboring pixel points, respectively; and the weights are used to weight the neighboring pixels to obtain the denoising result for the current pixel point.

However, since the UV channel itself contains only low-frequency information of the image, where it has very low contrast and the similarity of neighboring pixel points lacks discrimination, the output results based on the color noise reduction algorithm tend to have a strong color overflow.

2. Because using only the UV channel is prone to color overflow, an attempt is made to introduce information from the Y channel to protect the colors at the strong edges of the image from being contaminated by neighboring pixels. For example, the edge information of the image is detected through the Y channel. Then, at the detected edges of the image, methods such as reducing the search window for similar points, lowering the strength of denoising, and reintroducing some original image signals after denoising are employed to prevent color overflow at the edges.

However, while this color noise reduction method can to some extent reduce color overflow, it often leaves a significant amount of noise at the edges of the image.

Based on this, the present disclosure provides a method for reducing color noise. Using the image in target format indirectly introduces information from the Y channel of the source image. This effectively distinguishes the similarity between neighboring pixels and maximizes the reduction of color noise in the edge region. At the same time, there will be no color overflow and residual edge noise in the color noise reduction process.

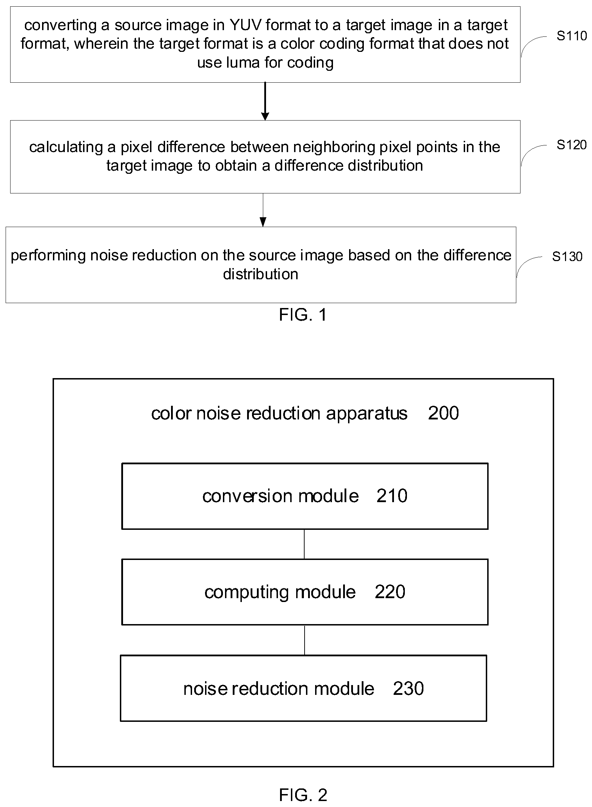

As shown in FIG. 1, FIG. 1 is a flowchart of a method for reducing color noise illustrated by the embodiments of the present disclosure, wherein the method comprises steps S110 to S130.

S110: converting a source image in YUV format to a target image in a target format, wherein the target format is a color-coding format that does not use luma for coding.

A source image is acquired, wherein the source image is an image using the YUV format for color encoding. Color encoding refers to various methods used in computer systems and digital devices to represent, store, and transmit colors.

The source image is converted from the source format to the target format and the target image is generated, wherein the target format is color encoded using the target format. The target formats are those that do not utilize luma characteristics for color encoding, such as RGB, CMYK, HSV/HSL, Hexadecimal Color Codes, LAB Color Space, etc. The present disclosure does not restrict the specific form of the target format. The target format does not use features in the dimension of luma for color coding. For example, for RGB (Red, Green, Blue), which is based on the additive color principle of light, various colors are produced by mixing different proportions of red, green, and blue light. For example, in HSV/HSL (Hue, Saturation, Value/Lightness), colors are described based on hue (the type of color), saturation (the purity of the color), and luma/lightness (the brightness of the color). These color encoding methods are closer to the way that humans perceive colors.

Exemplarily, in the present disclosure, RGB format is used as the target format. Through the conversion from YUV to RGB, the target image corresponding to the source image, i.e., RGB image, is obtained. YUV to RGB conversion can be performed using the following formula 1 to 3.$R = Y + 1.4075 ∗ \left(V-128\right)$$G = Y - 0.3455 ∗ \left(U-128\right) - 0.7169 ∗ \left(V-128\right)$$B = Y + 1.779 ∗ \left(U-128\right)$

S120: calculating a pixel difference between neighboring pixel points in the target image to obtain a difference distribution.

For each pixel point in the target image, the pixel value difference between the pixel and its neighboring pixel point is calculated to obtain the pixel difference of each pixel point in the target image. The pixel differences of all pixel points in the target image constitute the difference distribution of the target image.

Exemplarily, assuming that the image is 8x8 in size, for the pixel point at position (4, 4), the difference in pixel value between it and the pixel point at position (4, 3) is calculated. Alternatively, assuming that the image is 8x8 in size, for the pixel point at position (4, 4), the differences in pixel value between it and the pixel points at position (3, 4) and (5, 4) are calculated, respectively. For the calculation of pixel values and their differences, one method is to weight the RGB channels to obtain a weighted pixel value, and then calculate the difference between the weighted pixel values of two pixel points. It is also understood that the calculation method for pixel values and their differences is not limited to the above example. It can involve other methods, and the present disclosure does not impose limitations on it.

In one embodiment of the present disclosure, the step of calculating a pixel difference between neighboring pixel points in the target image to obtain a difference distribution comprises calculating the pixel differences between a pixel point in the target image and all the pixel points in a neighboring region of the pixel point to obtain a difference matrix; and obtaining the difference matrices of all the pixel points in the target image to obtain the difference distribution.

For each pixel point in the target image, the pixel value difference between the pixel point and all the pixel points in a neighboring region is calculated to obtain the difference matrix of each pixel point. A neighboring region of the pixel point includes at least one of the following: a region neighboring the pixel point above the pixel point, a region neighboring the pixel point below the pixel point, a region neighboring the pixel point to the left of the pixel point, and a region neighboring the pixel point to the right of the pixel point. The region neighboring the pixel point above the pixel point can be a region consisting of one or more pixel points. For example, for a pixel point at position (4, 4), the adjacent region above it can be: a region comprising pixel point at position (4, 3); a region comprising pixel points at positions (3, 3), (4, 3), and (5, 3); or a region comprising pixel points at positions (3, 3), and (5, 3) adjacent at a diagonal. In some embodiments of the present disclosure, neighboring regions can be a combination of one or more regions. For example, neighboring regions can be a combination of the region neighboring the pixel point to the left of the pixel point and the region neighboring the pixel point to the right of the pixel point. In the embodiments of the present disclosure, there are no restrictions on the size, the manner of neighboring to the pixel point, the shape, etc., of the neighboring regions.

For example, the pixel value differences between each pixel point and all the pixel points within its left adjacent 2x2 region will be calculated. Assuming that the image is 8x8 in size, for the pixel point at position (4, 4), all the pixel points within its left adjacent 2x2 region will be calculated; in other words, the pixel point at position (4, 4), along with the pixel points at positions (3, 4), (2, 4), (3, 5), and (2, 5), will be respectively calculated for the pixel value differences. For example, the pixel value differences between each pixel point and all the pixel points within its right adjacent 1x3 region will be calculated. Assuming that the image is 8x8 in size, for the pixel point at position (4, 4), it will be respectively calculated for the pixel value differences with the pixel points at positions (5, 3), (5, 4), and (5, 5).

Multiple difference values can be obtained for each pixel point, and by storing them in a predetermined order, a difference matrix for each pixel point can be generated. Exemplarily, for the pixel point at position (4, 4), the pixel value differences of all the pixel points within its left adjacent 2x2 region are calculated. The absolute value of each difference is taken to obtain the matrix (1, 2, 3, 4). In the above matrix, the differences after taking the absolute values are arranged in the order where the differences correspond to the pixel points, which means that difference 1 corresponds to the absolute value of the difference between the pixel point at position (3, 4) and the pixel point at position (4, 4).

The difference matrices of all the pixel points in the target image are obtained to build the difference distribution of the target image, and the difference distribution can be D_{(1, 1)}, D_{(1, 2)}, D_{(1, 3)},..., D_{(8, 8)}, wherein for D_{(4, 4)}, it is (1, 2, 3, 4).

In the above embodiment, obtaining the difference values between a pixel point and all the pixel points in its neighboring region enables the recognition of the variations of the pixel point in all directions, thereby obtaining more information about the pixel point.

Further, the neighboring region is the region within a preset radius around the pixel point in the target image, with the pixel point as the center.

For each pixel point, its neighboring region is a rectangular region within a preset radius centered thereon. For example, if the neighboring region is a neighboring 3x3 region centered around it, assuming that the image is 8x8 in size, for the pixel point at position (4, 4), it will calculate the differences of all the pixel points within its neighboring 3x3 region centered around it. In other words, the pixel point at position (4, 4) will be respectively calculated for the pixel value differences with the pixel points at positions (3, 3), (3, 4), (3, 5), (4, 3), (4, 5), (5, 3), (5, 4), and (5, 5). Exemplarily, the calculation of pixel values can be done to calculate the differences of the pixel points between pixel values in the R channel, G channel, and B channel, separately. Therefore, for each pixel point, calculating the differences between it and all the pixel points within the neighboring region can be done using formula 4. 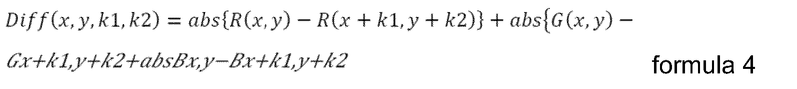 Diff(x, y, k1,k2) = abs{R(x, y) - R(x + k1, y + k2)} + abs{G(x, y) - Gx+k1,y+k2+absBx,y-Bx+k1,y+k2
where Diff represents the difference operation, abs represents taking the absolute value, k1 represents the offset value in the row direction of the pixel point, the range of k1 is [-r, r], k2 represents the offset value in the column direction of the pixel point, the range of k2 is [-r, r], r represents the radius of the value, and *x + k*1, *y* + *k*2 represents the point centered at the current point (x, y) and taken in its neighborhood with the radius r.

S130: performing noise reduction on the source image based on the difference distribution.

After obtaining the difference distribution from the target image, it can be utilized for noise reduction of the source image. Exemplarily, noise typically manifests as random, high-frequency differences, however, important content in an image, such as edges and textures, tends to exhibit more consistent, patterned differences. Therefore, analyzing these differences can help distinguish between noise and important image content. If a pixel point is set and its corresponding pixel difference is greater than a preset threshold, it is indicated to be a noisy pixel point. Another example is setting a region with a stride of 2 and a size of 2x2, where it selects the specified size in a gradual stride, for all pixels within each region, if the number of pixel points with pixel differences all greater than the threshold is greater than or equal to two, then it indicates that the region is a noisy region. It is understood that there are various methods for determining noise based on difference values, which are not limited to the examples mentioned above. The present disclosure does not limit the method of determining noise. The pixels identified as noise are processed by smoothing. This can be achieved using various filtering techniques such as median filtering, Gaussian filtering, or bilateral filtering. Filtering can help reduce high-frequency differences, thereby reducing noise.

In another embodiment, a denoising method using differences can be the smoothing of the edge. By analyzing the differences, the edge regions of the image can be identified, wherein the edge regions typically have larger pixel differences. For the identified edge regions, specific measures can be taken. For example, the denoising strength in these regions can be reduced to avoid excessive smoothing. It is understood that there are various methods for denoising based on difference values, which are not limited to the examples mentioned above. The specific embodiments of the present disclosure that utilize differences for noise reduction are not limited.

In the above embodiment, using the image in the target format indirectly introduces information from the Y channel of the source image. This effectively distinguishes the similarity between neighboring pixels and maximizes the reduction of color noise in the edge region. At the same time, it addresses color overflow and residual edge noise in the color noise reduction process.

In one embodiment of the present disclosure, the step of performing noise reduction on the source image based on the difference distribution comprises calculating a weight parameter of each pixel point based on the pixel difference corresponding to each pixel point of the source image in the difference distribution; and weighting the neighboring pixels corresponding to each pixel point in the source image based on the weight parameter of each pixel point to achieve noise reduction.

The pixel points in the source image and the target image correspond one-to-one; that is, the pixel difference for a pixel point in the target image is also the pixel difference for the corresponding pixel point in the source image.

For each pixel point in the source image, its corresponding pixel difference in the difference distribution is obtained. The weight parameter of the pixel is calculated based on the obtained pixel difference. The neighboring pixels of the pixel are weighted based on the weight parameter of the pixel. The pixel value obtained after weighting is used as the pixel value of the pixel to achieve noise reduction.

Exemplarily, the pixel value differences between each pixel point and all the pixel points within its left adjacent 2x2 region will be calculated. Assuming that the image is 8x8 in size, for the pixel point at position (4, 4) in the source image, it obtains the pixel difference of the pixel point at position (4, 4) in the target image, and assumes that the difference is (4, 5, 6, 7). The conversion of difference values to weight parameters is not limited in the present disclosure, and various methods can be used to obtain the weight parameters. For example, it can be a normalization conversion, or it can be a proportional conversion. Exemplarily, the present disclosure utilizes proportional conversion to transform the differences into weights (0.182, 0.227, 0.273, 0.318). After obtaining the weight parameter, assuming that the pixel values of the pixel points at positions (3, 4), (2, 4), (3, 5), and (2, 5) in the source image are respectively (100, 150, 200, 300), then it is weighted as: 100×0.182+150×0.227+200×0.273+300×0.318, where the pixel value of the pixel point at position (4, 4) in the source image is 202. Noise reduction of a pixel point is achieved by weighting the neighboring pixel points of a pixel point and calculating the pixel value of the pixel point.

In the above embodiment, the target image is weighted as a guide image of the source image, and the target image indirectly introduces information from the Y channel of the source image. This effectively distinguishes the similarity between neighboring pixels and maximizes the reduction of color noise in the edge region. At the same time, there will be no color overflow and residual edge noise in the color noise reduction process.

In one embodiment of the present disclosure, the step of performing noise reduction on the source image based on the difference distribution comprises obtaining a weight matrix of each pixel point in the source image, wherein the weight matrix is calculated from the difference matrix of the corresponding pixel point in the target image; weighting pixel values of all the pixel points within the neighboring region corresponding to each pixel point in the source image based on the weight matrix of the pixel point to achieve noise reduction.

In the above embodiment in which a neighboring region of the pixel point is a rectangular region within a preset radius centered thereon and a difference matrix between the pixel point and the neighboring region is calculated,

for the difference matrix of each pixel point in the target image, it is converted into a weight matrix, and the conversion process can be performed by formula 5:$W \left(x, y, k1, k2\right) = exp \left(-Diff\left(x, y, k1, k2\right)/Sigma\right)$ where Exp represents the index of e, Sigma represents a preset constant and W(x, y, k1, k2) represents the weight matrix of the pixel point whose position is at (x, y).

For each pixel point in the source image, its corresponding weight matrix is obtained based on the correspondence of the pixel points. All pixel points in the neighboring region of the pixel are weighted based on the weight matrix of the pixel, and the weighted pixel value is used as the pixel value of the pixel point to realize noise reduction.

In the above embodiment, using the difference distribution to build the weight matrix enables the full utilization of the surrounding region of the pixel point so as to denoise the pixel points, thereby enhancing the effectiveness of noise reduction.

Further, the step of performing noise reduction on the source image based on the difference distribution comprises denoising, separately, a U channel and a V channel, based on the difference distribution.

The neighboring pixel points of the U and V channels are weighted using the calculated weighting weights respectively. Specifically, this can be performed by formulas 6 and 7:
$NRU \left(x, y\right) = \frac{{\sum }_{k 1 = - r}^{r} {\sum }_{k 2 = - r}^{r} W \left(x,y,k1,k2\right) ∗ U \left(x+k1,y+k2\right)}{{\sum }_{k 1 = - r}^{r} {\sum }_{k 2 = - r}^{r} W \left(x,y,k1,k2\right)}$
$NRV \left(x, y\right) = \frac{{\sum }_{k 1 = - r}^{r} {\sum }_{k 2 = - r}^{r} W \left(x,y,k1,k2\right) ∗ V \left(x+k1,y+k2\right)}{{\sum }_{k 1 = - r}^{r} {\sum }_{k 2 = - r}^{r} W \left(x,y,k1,k2\right)}$
where NRU represents the result after denoising the U channel in the YUV image, NRV represents the result after denoising the V channel in the YUV image, U(x + k1, y + k2) represents the neighborhood pixels within a radius r centered at (x, y) in the U channel, and V(x + k1, y + k2) represents the neighborhood pixels within a radius r centered at (x, y) in the V channel.

As shown in FIG. 2, FIG. 2 is a block view of the structure of a color noise reduction apparatus 200 provided by the embodiment of the present disclosure. The color noise reduction apparatus 200 comprises a conversion module 210, a computing module 220, and a noise reduction module 230.

The conversion module 210 is configured for converting a source image in YUV format to a target image in a target format, wherein the target format is a color-coding format that does not use luma for coding.

The computing module 220 is configured for calculating a pixel difference between neighboring pixel points in the target image to obtain a difference distribution.

The noise reduction module 230 is configured for performing noise reduction on the source image based on the difference distribution.

In one optional embodiment of the present disclosure, the computing module 220 is specifically configured for calculating the pixel differences between a pixel point in the target image and all the pixel points in a neighboring region of the pixel point to obtain a difference matrix; and obtaining the difference matrices of all the pixel points in the target image to obtain the difference distribution.

In one optional embodiment of the present disclosure, the neighboring region is the region within a preset radius around the pixel point in the target image, with the pixel point as the center.

In one optional embodiment of the present disclosure, the noise reduction module 230 is specifically configured for calculating a weight parameter of each pixel point based on the pixel difference corresponding to each pixel point of the source image in the difference distribution; and weighting the neighboring pixels corresponding to each pixel point in the source image based on the weight parameter of each pixel point to achieve noise reduction.

In one optional embodiment of the present disclosure, the noise reduction module 230 is specifically configured for obtaining a weight matrix of each pixel point in the source image, wherein the weight matrix is calculated from the difference matrix of the corresponding pixel point in the target image; weighting all the pixel points within the neighboring region corresponding to each pixel point in the source image based on the weight matrix of each pixel point to achieve noise reduction.

In one optional embodiment of the present disclosure, the target format includes RGB format.

In one optional embodiment of the present disclosure, the noise reduction module 230 is specifically configured for denoising, separately, a U channel and a V channel, based on the difference distribution.

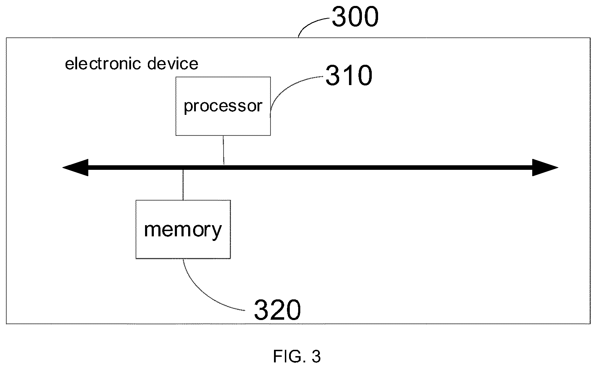

As shown in FIG. 3, FIG. 3 illustrates a block diagram of the structure of an electronic device 300 provided in the embodiments of the present disclosure. The electronic device 300 comprises a processor 310 and a memory 320,

wherein the processor 310, the memory 320, and each component are directly or indirectly electrically connected to achieve data transmission or interaction. For example, these components can be electrically connected to each other through one or more communication buses or signal lines. The memory 320 is configured to store computer programs, such as the software functional module depicted in FIG. 2, namely the color noise reduction apparatus 200. The color noise reduction apparatus 200 includes at least one software functional module stored in the form of software or firmware in the storage device 320 or embedded in the operating system (OS) of the electronic device 300. The processor 310 is configured to execute the executable modules stored in the memory 320, such as the software functional module or computer program included in the color noise reduction apparatus 200.

The memory 320 can be, but is not limited to, random access memory (RAM), read-only memory (ROM), programmable read-only memory (PROM), erasable programmable read-only memory (EPROM), electrically erasable programmable read-only memory (EEPROM), and the like.

The processor 310 can be an integrated circuit chip with signal processing capability. The processor can be a general-purpose processor, comprising a central processing unit (CPU), network processor (NP), microprocessor, etc. It can also be a digital signal processor (DSP), application specific integrated circuit (ASIC), field-programmable gate array (FPGA), or other programmable logic devices, discrete gates, or transistor logic devices, as well as discrete hardware components. It can implement or perform each of the methods, steps, and logical block diagrams disclosed in the embodiment of the present disclosure. Or, the processor 310 can also be any conventional processor, and so on.

The embodiments of the present disclosure further provide a nonvolatile computer-readable storage medium (referred to as a storage medium), wherein the storage medium stores a computer program. The computer program, when executed by a computer such as the aforementioned electronic device 300, performs the method for reducing color noise as described above.

It should be noted that each embodiment described in the summary is progressively elaborated upon, with each embodiment focusing on the differences from the others. The identical or similar parts between the various embodiments can be cross-referenced as needed.

In the several embodiments provided in the present disclosure, it should be understood that the devices and methods disclosed can be implemented in other ways. The device embodiments described above are merely illustrative. For example, the flowcharts and diagrams in the drawings illustrate possible implementations, architectures, functions, and operations of devices, methods, and computer program products according to multiple embodiments of the present disclosure. At this point, each box in the flowchart or diagram can represent a module, program segment, or part of the code. Each part of the module, program segment, or code includes one or more executable instructions for implementing the specified logical functions. It should also be noted that in some alternative implementations, the functions indicated in the boxes may occur in a different order than those indicated in the drawings. For example, two consecutive boxes can actually be executed in parallel, and sometimes they can also be executed in reverse order, depending on the functionality involved. It should also be noted that each box in the block diagram and/or flowchart, and the combination of boxes in the block diagram and/or flowchart, can be implemented by specialized hardware-based systems designed to perform the specified functions or actions, or by a combination of specialized hardware and computer instructions.

Further, each functional module in each embodiment of the present disclosure can be integrated together to form a separate part, or each module may exist separately, or two or more modules may be integrated to form a separate part.

The functionality, when implemented as a software functional module and sold or used as a stand-alone product, can be stored in a computer-readable storage medium. It is understood that the technical solution of the present disclosure, or that part of the technical solution that essentially contributes to the prior art, may be embodied in the form of a software product stored in a computer-readable storage medium comprising a number of instructions to cause a computer device (which may be a personal computer, a notebook computer, a server, or an electronic device, etc.) to perform all or some of the steps of the method described in various embodiments of the present disclosure. All or some of the steps of the method are described in various embodiments of the present disclosure. The aforementioned computer-readable storage medium comprises various media that can store program code, such as Various media that can store program code, such as USB flash drives, mobile hard drives, read-only memory (ROM), random access memory (RAM), disks, or CD-ROMs.

The above is only a specific embodiment of the present disclosure, but the scope of protection of the present disclosure is not limited thereto. Any person skilled in the art can easily envisage changes or substitutions within the technical scope disclosed in the present disclosure, which should be encompassed within the scope of protection of the present disclosure. Therefore, the scope of protection of the present disclosure shall be stated to be subject to the scope of protection of the claims.

## Claims

1. A computer implemented method for reducing color noise, wherein the method comprises:
converting a source image in YUV format to a target image in a target format, wherein the target format is a color-coding format that does not use luma for coding;
calculating a pixel difference between neighboring pixel points in the target image to obtain a difference distribution; and
performing noise reduction on the source image based on the difference distribution,
wherein the step of calculating a pixel difference between neighboring pixel points in the target image to obtain a difference distribution comprises:
calculating pixel differences between a pixel point in the target image and all pixel points in a neighboring region of the pixel point to obtain a difference matrix; and
obtaining difference matrices of all pixel points in the target image to obtain the difference distribution,
wherein, for the calculation of pixel differences, the RGB channels are weighted to obtain a weighted pixel value, and the difference between the weighted pixel values of two pixel points is calculated,
wherein the step of performing noise reduction on the source image based on the difference distribution comprises:
calculating a weight parameter of each pixel point based on a pixel difference corresponding to each pixel point of the source image in the difference distribution;
weighting neighboring pixels corresponding to each pixel point in the source image based on the weight parameter of each pixel point to achieve the noise reduction;
obtaining a weight matrix of each pixel point in the source image, wherein the weight matrix is calculated from the difference matrix of a corresponding pixel point in the target image;
weighting all pixel points within a neighboring region corresponding to each pixel point in the source image based on the weight matrix of each pixel point to achieve the noise reduction; and
denoising, separately, a U channel and a V channel, based on the difference distribution,
wherein, if a pixel point is set and its corresponding pixel difference is greater than a preset threshold, it is indicated to be a noisy pixel point and if the number of pixel points with pixel differences all greater than the threshold is greater than or equal to two, then it indicates that the region is a noisy region, wherein the pixels identified as noise are processed by smoothing, wherein the edge regions of the image are identified by analyzing the differences, wherein the denoising strength in these regions is reduced to avoid excessive smoothing,
wherein the pixel value obtained after weighting is used as the pixel value of the pixel to achieve noise reduction, and
wherein the target image is weighted as a guide image of the source image, and the target image indirectly introduces information from the Y channel of the source image.

2. The method according to claim 1, wherein the neighboring region is a region within a preset radius around the pixel point in the target image, with the pixel point as a center.

3. The method according to any one of claims 1 to 2, wherein the target format comprises RGB format.

4. A color noise reduction apparatus, wherein the apparatus comprises:
a conversion module, configured for converting a source image in YUV format to a target image in a target format, wherein the target format is a color-coding format that does not use luma for coding;
a computing module, configured for calculating a pixel difference between neighboring pixel points in the target image to obtain a difference distribution; and
a noise reduction module, configured for performing noise reduction on the source image based on the difference distribution,
wherein the color noise reduction apparatus is configured to perform the steps of the method according to any one of claims 1 to 3.

5. An electronic device, comprising a processor and a memory, wherein the processor and the memory communicate with each other through a bus; and the memory stores program instructions executable by the processor, and the processor calls the program instructions that are capable of executing the method for reducing color noise according to any one of claims 1 to 3.

6. A computer-readable storage medium, wherein the computer-readable storage medium stores computer program instructions; and the computer program instructions, when read and executed by a computer, perform the method for reducing color noise according to any one of claims 1 to 3.

## Patentansprüche

1. Computerimplementiertes Verfahren zum Reduzieren von Farbrauschen, wobei das Verfahren umfasst:
Umwandeln eines Quellbildes in YUV-Format in ein Zielbild in einem Zielformat, wobei das Zielformat ein Farbcodierungsformat ist, das kein Luma zum Codieren verwendet;
Berechnen einer Pixeldifferenz zwischen benachbarten Pixelpunkten in dem Zielbild, um eine Differenzverteilung zu erhalten; und
Durchführen einer Rauschreduzierung an dem Quellbild basierend auf der Differenzverteilung,
wobei der Schritt des Berechnens einer Pixeldifferenz zwischen benachbarten Pixelpunkten in dem Zielbild, um eine Differenzverteilung zu erhalten, umfasst:
Berechnen von Pixeldifferenzen zwischen einem Pixelpunkt in dem Zielbild und allen Pixelpunkten in einem benachbarten Bereich des Pixelpunkts, um eine Differenzmatrix zu erhalten; und
Erhalten von Differenzmatrizen aller Pixelpunkte in dem Zielbild, um die Differenzverteilung zu erhalten,
wobei für die Berechnung von Pixeldifferenzen die RGB-Kanäle gewichtet werden, um einen gewichteten Pixelwert zu erhalten, und die Differenz zwischen den gewichteten Pixelwerten von zwei Pixelpunkten berechnet wird,
wobei der Schritt des Durchführens einer Rauschreduzierung an dem Quellbild basierend auf der Differenzverteilung umfasst:
Berechnen eines Gewichtungsparameters jedes Pixelpunkts basierend auf einer Pixeldifferenz, die jedem Pixelpunkt des Quellbildes in der Differenzverteilung entspricht;
Gewichten benachbarter Pixel, die jedem Pixelpunkt in dem Quellbild entsprechen, basierend auf dem Gewichtungsparameter jedes Pixelpunkts, um die Rauschreduzierung zu erreichen;
Erhalten einer Gewichtungsmatrix jedes Pixelpunkts in dem Quellbild, wobei die Gewichtungsmatrix aus der Differenzmatrix eines entsprechenden Pixelpunkts in dem Zielbild berechnet wird;
Gewichten aller Pixelpunkte innerhalb eines benachbarten Bereichs, der jedem Pixelpunkt in dem Quellbild entspricht, basierend auf der Gewichtungsmatrix jedes Pixelpunkts, um die Rauschreduzierung zu erreichen; und
Separates Entrauschen eines U-Kanals und eines V-Kanals, basierend auf der Differenzverteilung,
wobei, wenn ein Pixelpunkt festgelegt ist und seine entsprechende Pixeldifferenz größer als ein voreingestellter Schwellenwert ist, gekennzeichnet wird, dass dieser ein verrauschter Pixelpunkt ist, und wenn die Anzahl von Pixelpunkten mit Pixeldifferenzen, die alle größer als der Schwellenwert sind, größer als oder gleich zwei ist, dann wird der Bereich als ein verrauschter Bereich gekennzeichnet, wobei die als Rauschen identifizierten Pixel durch Glätten bearbeitet werden, wobei die Randbereiche des Bildes durch Analysieren der Differenzen identifiziert werden, wobei die Entrauschungsstärke in diesen Bereichen reduziert wird, um übermäßige Glättung zu vermeiden,
wobei der nach dem Gewichten erhaltene Pixelwert als der Pixelwert des Pixels verwendet wird, um die Rauschreduzierung zu erreichen, und
wobei das Zielbild als ein Führungsbild des Quellbildes gewichtet wird und das Zielbild indirekt Informationen aus dem Y-Kanal des Quellbildes einführt.

2. Verfahren nach Anspruch 1, wobei der benachbarte Bereich ein Bereich innerhalb eines voreingestellten Radius um den Pixelpunkt in dem Zielbild ist, wobei der Pixelpunkt ein Mittelpunkt ist.

3. Verfahren nach einem der Ansprüche 1 bis 2, wobei das Zielformat ein RGB-Format umfasst.

4. Vorrichtung zum Reduzieren von Farbrauschen, wobei die Vorrichtung umfasst:
ein Umwandlungsmodul, das zum Umwandeln eines Quellbildes in einem YUV-Format in ein Zielbild in einem Zielformat konfiguriert ist, wobei das Zielformat ein Farbcodierungsformat ist, das kein Luma zum Codieren verwendet;
ein Berechnungsmodul, das zum Berechnen einer Pixeldifferenz zwischen benachbarten Pixelpunkten in dem Zielbild konfiguriert ist, um eine Differenzverteilung zu erhalten; und
ein Rauschreduzierungsmodul, das zum Durchführen einer Rauschreduzierung an dem Quellbild basierend auf der Differenzverteilung konfiguriert ist,
wobei die Vorrichtung zum Reduzieren von Farbrauschen zum Durchführen der Schritte des Verfahrens nach einem der Ansprüche 1 bis 3 konfiguriert ist.

5. Elektronische Vorrichtung, umfassend einen Prozessor und einen Speicher, wobei der Prozessor und der Speicher über einen Übertragungsweg miteinander kommunizieren; und der Speicher Programmanweisungen speichert, die durch den Prozessor ausführbar sind, und der Prozessor die Programmanweisungen aufruft, die in der Lage sind, das Verfahren zum Reduzieren von Farbrauschen nach einem der Ansprüche 1 bis 3 auszuführen.

6. Computerlesbares Speichermedium, wobei das computerlesbare Speichermedium Computerprogrammanweisungen speichert; und die Computerprogrammanweisungen, wenn sie durch einen Computer gelesen und ausgeführt werden, das Verfahren zum Reduzieren von Farbrauschen nach einem der Ansprüche 1 bis 3 durchführen.

## Revendications

1. Procédé mis en oeuvre par ordinateur de réduction de bruit de couleur, dans lequel le procédé comprend:
la conversion d'une image source dans format YUV en une image cible dans un format cible, dans lequel le format cible est un format de codage couleur qui n'utilise pas de luma pour le codage;
le calcul d'une différence de pixel entre des points de pixel voisins dans l'image cible pour obtenir une distribution de différence; et
la réalisation d'une réduction de bruit sur l'image source sur la base de la distribution de différence,
dans lequel l'étape de calcul d'une différence de pixel entre des points de pixel voisins dans l'image cible pour obtenir une distribution de différence comprend:
le calcul de différences de pixel entre un point de pixel dans l'image cible et tous les points de pixel dans une région voisine du point de pixel pour obtenir une matrice de différence; et
l'obtention de matrices de différence de tous les points de pixel dans l'image cible pour obtenir la distribution de différence,
dans lequel, pour le calcul de différences de pixel, les canaux RVB sont pondérés pour obtenir une valeur de pixel pondérée, et la différence entre les valeurs de pixel pondérées de deux points de pixel est calculée,
dans lequel l'étape de réalisation d'une réduction de bruit sur l'image source sur la base de la distribution de différence comprend:
le calcul d'un paramètre de pondération de chaque point de pixel sur la base d'une différence de pixel correspondant à chaque point de pixel de l'image source dans la distribution de différence;
la pondération de pixels voisins correspondant à chaque point de pixel dans l'image source sur la base du paramètre de pondération de chaque point de pixel pour obtenir la réduction de bruit;
l'obtention d'une matrice de pondération de chaque point de pixel dans l'image source, dans lequel la matrice de pondération est calculée à partir de la matrice de différence d'un point de pixel correspondant dans l'image cible;
la pondération de tous les points de pixel dans une région voisine correspondant à chaque point de pixel dans l'image source sur la base de la matrice de pondération de chaque point de pixel pour obtenir la réduction de bruit; et
le débruitage, séparément, d'un canal U et d'un canal V, sur la base de la distribution de différence,
dans lequel, si un point de pixel est défini et sa différence de pixel correspondante est supérieure à un seuil prédéfini, il est indiqué qu'il s'agit d'un point de pixel bruyant et si le nombre de points de pixel avec des différences de pixel toutes supérieures au seuil est supérieur ou égal à deux, alors il indique que la région est une région bruyante, dans lequel les pixels identifiés en tant que bruit sont traités par lissage, dans lequel les régions de bord de l'image sont identifiées en analysant les différences, dans lequel la force de débruitage dans ces régions est réduite pour éviter un lissage excessif,
dans lequel la valeur de pixel obtenue après pondération est utilisée en tant que valeur de pixel du pixel pour obtenir une réduction de bruit, et
dans lequel l'image cible est pondérée en tant qu'image de guidage de l'image source, et l'image cible introduit indirectement des informations à partir du canal Y de l'image source.

2. Procédé selon la revendication 1, dans lequel la région voisine est une région dans un rayon prédéfini autour du point de pixel dans l'image cible, avec le point de pixel en tant que centre.

3. Procédé selon l'une quelconque des revendications 1 à 2, dans lequel le format cible comprend un format RVB.

4. Appareil de réduction de bruit de couleur, dans lequel l'appareil comprend:
un module de conversion, configuré pour convertir une image source dans format YUV en une image cible dans un format cible, dans lequel le format cible est un format de codage couleur qui n'utilise pas de luma pour le codage;
un module de calcul, configuré pour calculer une différence de pixel entre des points de pixel voisins dans l'image cible pour obtenir une distribution de différence; et
un module de réduction de bruit, configuré pour réaliser une réduction de bruit sur l'image source sur la base de la distribution de différence,
dans lequel l'appareil de réduction de bruit de couleur est configuré pour réaliser les étapes du procédé selon l'une quelconque des revendications 1 à 3.

5. Dispositif électronique, comprenant un processeur et une mémoire, dans lequel le processeur et la mémoire communiquent l'un avec l'autre par l'intermédiaire d'un bus; et la mémoire stocke des instructions de programme exécutables par le processeur, et le processeur appelle les instructions de programme qui sont capables d'exécuter le procédé de réduction de bruit de couleur selon l'une quelconque des revendications 1 à 3.

6. Support de stockage lisible par ordinateur, dans lequel le support de stockage lisible par ordinateur stocke des instructions de programme informatique; et les instructions de programme informatique, lorsqu'elles sont lues et exécutées par un ordinateur, réalisent le procédé de réduction de bruit de couleur selon l'une quelconque des revendications 1 à 3.
